(19) Europäisches Patentamt
European Patent Office
Office européen des brevets

(11) **EP 2 147 488 B1**

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(51) Int Cl.:
*H01S 3/067* *(2006.01)* *H01S 3/08* *(2006.01)*
*H01S 3/106* *(2006.01)*

(21) Anmeldenummer: **08758025.4**

(22) Anmeldetag: **05.05.2008**

(86) Internationale Anmeldenummer:
**PCT/DE2008/000766**

(87) Internationale Veröffentlichungsnummer:
**WO 2008/135034 (13.11.2008 Gazette 2008/46)**

(54) **ABSTIMMBARER LASER**

TUNABLE LASER

LASER ACCORDABLE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **07.05.2007 DE 102007021313**

(43) Veröffentlichungstag der Anmeldung:
**27.01.2010 Patentblatt 2010/04**

(73) Patentinhaber: **Ludwig-Maximilians-Universität München**
**80539 München (DE)**

(72) Erfinder: **HUBER, Robert Alexander**
**83530 Schnaitsee (DE)**

(74) Vertreter: **Lucke, Andreas et al**
**Boehmert & Boehmert**
**Pettenkoferstrasse 20-22**
**80336 München (DE)**

(56) Entgegenhaltungen:
**EP-A- 0 524 382      WO-A-03/096106**
**WO-A-2006/079078      GB-A- 2 317 045**

- HUBER R ET AL: "Fourier domain mode locked lasers for OCT imaging at up to 290 kHz sweep rates" PROCEEDINGS OF SPIE. OSA BIOMEDICAL OPTICS, SPIE, US, Bd. 5861, 1. Januar 2005 (2005-01-01), Seiten 1-6, XP002389840

**Beschreibung**

Die Erfindung betrifft einen abstimmbaren Laser gemäß dem Oberbegriff des Patentanspruchs 1. Insbesondere wird ein kompakter, extrem schnell abstimmbarer, schmalbandiger Laser angegeben.

Herkömmliche schnell abstimmbare Laser enthalten üblicherweise ein Lasermedium, welches Verstärkung über einen breiten Wellenlängenbereich aufweist und einen abstimmbaren optischen Bandpassfilter. Bei einer Erhöhung der Frequenz, mit welcher der optische Bandpassfilter abgestimmt wird, kann es vorkommen, dass die Laseraktivität aussetzt, weil das Licht im Resonator nicht mehr genügend Umläufe absolvieren kann, um eine gesättigte Laseraktivität aufzubauen, bevor der optische Bandpassfilter zu einer neuen Wellenlänge abgestimmt wird. Durch die Verwendung kürzerer Resonatorlängen kann dieses Problem nur bedingt gelöst werden, da bei kürzeren Resonatorlängen der Modenabstand des Lasers größer wird und verstärktes Rauschen auftritt.

Zur Überwindung dieses Problems ist aus der Druckschrift WO 2006/079078 A3 das Konzept der spektralen Modenkopplung (Fourier Domain Mode Locking - FDML) bekannt. Gemäß diesem Konzept wird der optische Filter synchron zur Umlaufzeit des Lichtes in dem Resonator abgestimmt. Das heißt, dass Licht einer bestimmten Wellenlänge nach einem Umlauf im Resonator wieder auf den optischen Filter trifft, wenn er wieder auf diese bestimmte Wellenlänge abgestimmt ist. Derartige FDML-Laser haben gegenüber herkömmlichen schnell abstimmbaren Lasern den Vorteil, dass keine fundamentale Beschränkung der Abstimmgeschwindigkeit besteht, und dass sie über eine schmälere Linienbreite und längere Koherenzlänge verfügen. Weiterhin weisen sie weniger Rauschen und mehr Leistung als herkömmliche schnell abstimmbare Laser auf und haben in der Regel keine diskrete Modenstruktur.

Ein Nachteil der bekannten FDML-Laser besteht aber darin, dass zur Synchronisation der Umlaufzeit in dem Resonator mit der Filterabstimmzeit eine sehr lange optische Verzögerungsstrecke verwendet wird. Als Verzögerungsstrecke wird in der Regel eine sehr lange Glasfaser verwendet. Bei einer Abstimmfrequenz des optischen Filters von 30 KHz ist beispielsweise eine 7 km lange Glasfaser erforderlich, um die Umlaufzeit in der Verzögerungsstrecke an die Abstimmfrequenz des Filters anzupassen. Durch die Verwendung derart langer Glasfasern entstehen vergleichsweise hohe Kosten. Weiterhin sind derartige FDML-Laser wegen der langen Glasfaser vergleichsweise groß.

Der Erfindung liegt die Aufgabe zugrunde, einen verbesserten abstimmbaren Laser anzugeben, der sich insbesondere dadurch auszeichnet, dass er vergleichsweise kompakt kostengünstig herstellbar ist.

Diese Aufgabe wird durch einen abstimmbaren Laser gemäß Patentanspruch 1 gelöst. Vorteilhafte Ausgestaltungen und Weiterbildungen der Erfindung sind Gegenstand der abhängigen Ansprüche.

Ein abstimmbarer Laser gemäß der Erfindung enthält ein optisches Verstärkungsmedium, einen ersten Resonator und einen periodisch abstimmbaren optischen Filter, wobei der Laser einen zweiten Resonator enthält, in dem Licht einer Laserwellenlänge eine Umlaufzeit T aufweist, der optische Filter zwischen dem ersten Resonator und dem zweiten Resonator angeordnet ist und mit einer Periode t abgestimmt wird, für die gilt: t = (n / m) T, wobei n und m ganzzahlig sind und m / n nicht ganzzahlig ist.

Der erste Resonator enthält das optische Verstärkungsmedium. Der erste Resonator muss nicht notwendigerweise einen Laserresonator im klassischen Sinn darstellen, sondern wird vorzugsweise von dem Laserlicht nur einmal durchlaufen. Anstelle der bei herkömmlichen FDML-Lasern verwendeten sehr langen optischen Verzögerungsstrecke enthält der Laser neben dem ersten Resonator einen zweiten Resonator, der mehrfach durchlaufen wird. Um einen mehrfachen Umlauf in dem zweiten Resonator zu erzielen, ist der optische Filter mit einer Frequenz synchronisiert, die einer subharmonischen, also einem Bruchteil der Umlauffrequenz des Lichts durch den zweiten Resonator, entspricht. Insbesondere ist die Umlaufzeit T = (m / n) t nicht gleich einem ganzzahligen Vielfachen der Periode t, mit der der optische Filter abgestimmt wird. Auf diese Weise wird erreicht, das Licht einer bestimmten Wellenlänge, das den zweiten Resonator durchläuft, beim nächsten Auftreffen auf den Filter von diesem nicht transmittiert wird, weil der Filter zu diesem Zeitpunkt auf eine andere Wellenlänge abgestimmt ist. Vielmehr ist der optische Filter erst nach n Umläufen des Lichts durch den zweiten Resonator wieder auf die bestimmte Wellenlänge abgestimmt.

Die Anzahl der Umläufe des Lichts in dem zweiten Resonator beträgt vorzugsweise n ≥ 2, besonders bevorzugt n ≥ 10, insbesondere n ≥ 100.

Der Laser hat zusätzlich zu den Vorteilen herkömmlicher FDML-Laser insbesondere den Vorteil, dass eine um einen Faktor n kürzere Faserlänge verwendet werden kann, wobei n die Anzahl der Umläufe in dem zweiten Resonator ist. Beispielsweise kann bei einer Anzahl von n = 100 Umläufen in dem zweiten Resonator eine 100-mal kürzere Glasfaser für den zweiten Resonator verwendet werden, als bei einem herkömmlichen FDML-Laser. Der Laser kann daher viel kompakter gestaltet werden und ist insbesondere im Fall von vorzugsweise verwendeten polarisationserhaltenden Spezialfasern wesentlich kostengünstiger.

Weiterhin ist es vorteilhaft, dass der optische Filter in kleineren Frequenzintervallen abgestimmt werden kann, als bei einem herkömmlichen FDML-Laser. Die Abstimmfrequenz im Vergleich zu herkömmlichen FDML-Lasern vorteilhaft in kleinen Schritten durchstimmbar, beispielsweise in 1 %-Schritten bei einem 100-fachen Umlauf durch den zweiten Resonator.

Beispielsweise kann ein herkömmlicher FDML-Laser mit einer 7 km langen Glasfaser mit einer Frequenz von 30 KHz oder höheren harmonischen davon, also 60 KHz, 90 KHz, 120 KHz usw., betrieben werden. Im Gegensatz dazu kann ein erfindungsgemäßer Laser, bei dem 100 Umläufe im Resonator stattfinden, beispielsweise mit Frequenzen von 30 KHz, 30,3 KHz, 30,6 KHz usw. betrieben werden.

Das optische Verstärkungsmedium des Lasers ist vorzugsweise im ersten Resonator enthalten. Dagegen ist der zweite Resonator vorteilhafterweise ein passiver Resonator. Bei dem periodischen Abstimmen des optischen Filters können jeweils bestimmte Wellenlängen, die sich im jeweils eingestellten Transmissionsbereich des Filters befinden, aus dem ersten Resonator in den zweiten Resonator und zurück transmittiert werden. Diejenigen Wellenlängen, die von dem Filter nicht transmittiert werden, werden von dem Filter vorzugsweise annähernd vollständig in den zweiten Resonator zurückreflektiert. Dazu ist es vorteilhaft, wenn die Absorption des Filters vernachlässigbar klein ist. Insbesondere kann es sich bei dem optischen Filter um einen abstimmbaren Fabry-Perot-Filter handeln.

Gemäß zumindest einer Ausführungsform des Lasers ist der optische Filter als Fabry-Perot-Filter ausgestaltet. Solche Filter sind effizient durchstimmbar und weisen eine hohe Güte auf.

Gemäß zumindest einer Ausführungsform des Lasers ist der optische Filter während einer Abstimmperiode t zumindest zeitweise frequenzunabhängig sperrbar. Dies wird gemäß zumindest einer Ausführungsform des Lasers dadurch realisiert, dass der Filter senkrecht zu einer Transmissionsrichtung auslenkbar ist.

Gemäß zumindest einer Ausführungsform des Lasers umfasst der zweite Resonator zumindest ein polarisationsdrehend wirkendes Element. Bevorzugt ist dieses Element mit einem Faraday-Spiegel oder mit einem Sagnac-Typ Faserspiegel gestaltet.

Gemäß zumindest einer Ausführungsform des Lasers weist dieser im ersten Resonator mindestens ein polarisationsselektives Verstärkungsmedium auf. Über ein solches Verstärkungsmedium kann die Polarisation der verstärkten Strahlung effektiv eingestellt werden.

Gemäß zumindest einer Ausführungsform des Lasers ist die Strahlung aus dem zweiten Resonator auskoppelbar. Hierdurch kann die Auskoppelfrequenz in einem weiten Bereich eingestellt werden.

Gemäß zumindest einer Ausführungsform des Lasers umfasst dieser mindestens einen Nachverstärker. Über eine Nachverstärkung der aus dem ersten oder zweiten Resonator ausgekoppelten Strahlung können hohe optische Leistungen des Lasers erzielt werden.

Gemäß zumindest einer Ausführungsform des Lasers weist der erste Resonator mindestens eine polarisationserhaltende Faser auf. Über eine solche Faser kann der Polarisationszustand des Lichts erhalten werden.

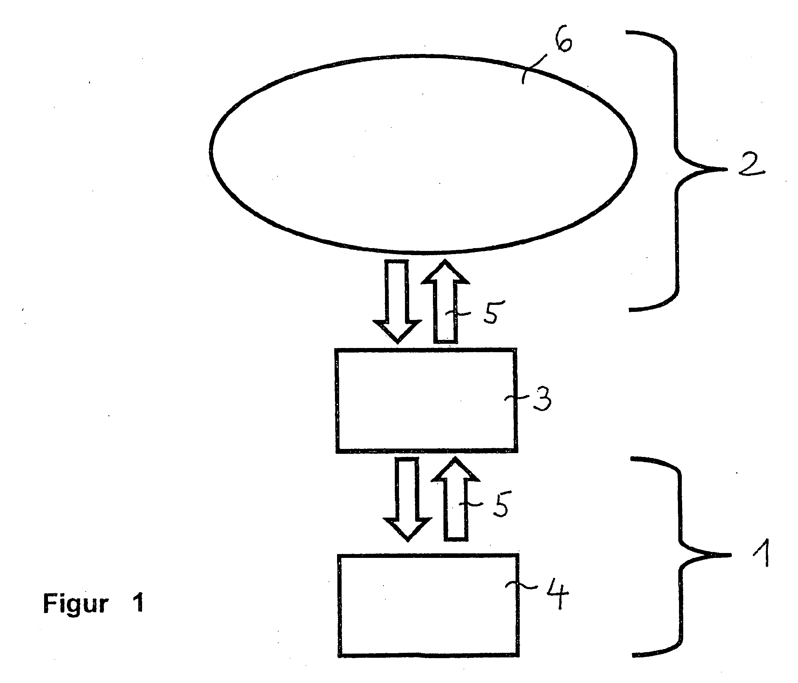

Die Erfindung wird im Folgenden anhand der Figuren 1 bis 13 näher erläutert.

Die Figuren 1 bis 13 zeigen jeweils schematische Darstellungen von Ausführungsbeispielen eines erfindungsgemäßen abstimmbaren Lasers.

Gleiche oder gleich wirkende Elemente sind in den Figuren mit den gleichen Bezugszeichen versehen.

Das in Figur 1 schematisch dargestellte Ausführungsbeispiel eines abstimmbaren Lasers enthält einen ersten Resonator 1, der ein optisches Verstärkungsmedium 4 enthält. Weiterhin enthält der Laser einen zweiten Resonator 2, bei dem es sich vorzugsweise um einen passiven Resonator handelt, also einen Resonator ohne optisches Verstärkungsmedium. Zwischen dem ersten Resonator 1 und dem zweiten Resonator 2 ist ein wellenlängenselektiver optischer Filter 3 angeordnet, der periodisch abgestimmt wird und somit jeweils zu einem bestimmten Zeitpunkt für einen bestimmten Wellenlängenbereich transparent ist und für diese Wellenlängen den Übergang von dem ersten Resonator in den zweiten Resonator ermöglicht, wie es durch die Pfeile 5 angedeutet wird. Der zweite Resonator wirkt als optischer Speicher 6, in dem das Licht so lange zirkuliert, bis der Filter 3 nach einer Anzahl n Umläufen wieder derart abgestimmt ist, dass er für die bestimmte Wellenlänge transparent ist. In dem zweiten Resonator 2 benötigt das Licht für einen kompletten Umlauf die Zeit T.

Der Filter 3 ist mit einer Periode t abgestimmt, die die Bedingung $t = (n / m) T$ erfüllt, wobei $n$ und $m$ von 0 verschiedene ganze Zahlen sind. Der Wert $m / n$ ist nicht ganzzahlig, sodass die Umlaufzeit $T = (m / n) t$ in dem zweiten Resonator nicht einem ganzzahligen Vielfachen der Periode $t$ des optischen Filters entspricht. Nachdem eine bestimmte Wellenlänge durch den Filter 3 transmittiert wurde, ist der Filter daher nicht bereits nach einem Umlauf durch den zweiten Resonator 2 wieder transparent, sondern erst nach einer Anzahl von $n$ Umläufen. Im Gegensatz zu einer von herkömmlichen FDML-Lasern bekannten optischen Verzögerungsstrecke wird der zweite Resonator 2 also mehrfach durchlaufen, wobei die Anzahl der Umläufe $n$ nach oben nur durch die bei sehr vielen Umläufen auftretenden optischen Verluste begrenzt ist. Der erste Resonator 1, der das optisch aktive Medium 4 enthält, sollte derart kurz sein, dass das Licht während der Zeit, während der der optische Filter 3 für eine bestimmte Wellenlänge transparent ist, einen vollen Umlauf in dem ersten Resonator absolvieren kann. Nach einem Umlauf in dem im Verhältnis zum zweiten Resonator kurzen ersten Resonator ist der Filter also geringfügig oder gar nicht verstimmt. Es ist möglich, dass das Licht in zwei geringfügig verschiedenen Zuständen des Filters transmittiert wird, wenn der Filter nicht stufenweise durchgestimmt wird. In dieser Konfiguration liegt also keine perfekte Synchronisation zwischen der Umlaufzeit in dem ersten Resonator und der Periode $t$, mit der der Filter 3 abgestimmt wird, vor.

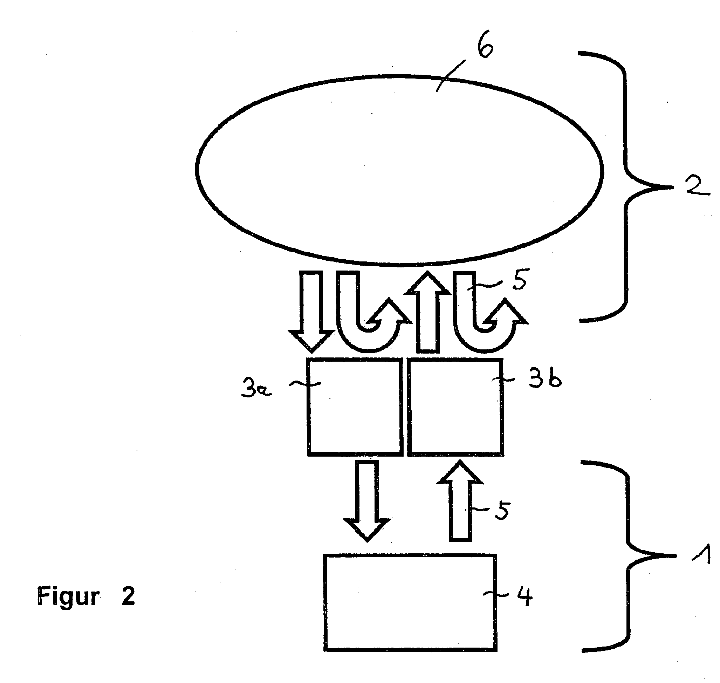

Um eine bessere Synchronisation zu erzielen, kann ein Aufbau mit zwei oder mehr Filtern verwendet werden. Figur 2 zeigt schematisch ein Ausführungsbeispiel eines erfindungsgemäßen Lasers, bei dem das Einkoppeln und Auskoppeln von Licht aus dem ersten Resonator 1 in den zweiten Resonator 2 und umgekehrt nicht von einem einzigen Filter, sondern von zwei Filtern 3a, 3b bewirkt wird. Bei dieser Ausführungsform kann Licht aus dem als optischen Speicher 6 wirkenden zweiten Resonator 2 durch einen ersten Filter 3a in den ersten Resonator 1, der den optischen Verstärker 4 enthält, eingekoppelt werden. Nach einem Umlauf durch den ersten Resonator 1 wird das Licht durch den zweiten Filter 3b wieder in den zweiten Resonator 2 eingekoppelt. Der zweite Filter 3b ist nach einer Umlaufzeit des Lichts durch den ersten Resonator 1 auf die Wellenlänge abgestimmt, die zuvor von dem ersten Filter 3a transmittiert wurde. Auf diese Weise kann eine perfekte Synchronisation wie bei einem FDML-Laser erzielt werden. Der erste Resonator 1 wird von dem Licht im Gegensatz zu herkömmlichen Laserresonatoren nur einmal durchlaufen.

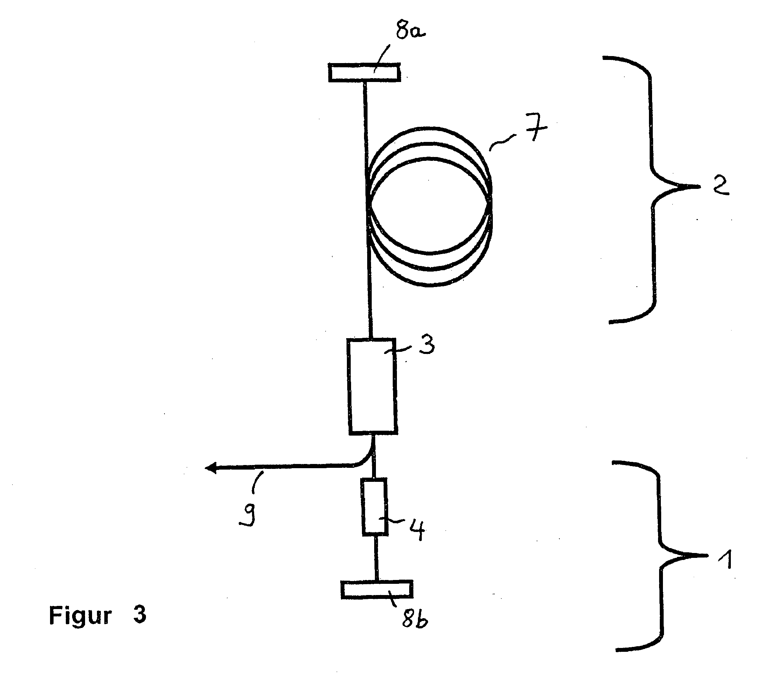

Bei dem in Figur 3 schematisch dargestellten Ausführungsbeispiel enthält der zweite Resonator 2 eine optische Faser 7. Die Faser 7 ist vorzugsweise eine Einmoden-Faser. Insbesondere kann es sich bei der Faser 7 um eine polarisations-erhaltende Faser handeln, um eine Veränderung des Polarisationszustands zu verhindern und um Instabilitäten zu vermeiden. Im Falle einer Standard-Einmoden-Faser können auch zusätzliche Polarisations-Controller verwendet werden, um eine gewünschte Polarisation einzustellen. Der zweite Resonator 2 wird auf der einen Seite durch einen ersten Spiegel 8a begrenzt, bei dem es sich beispielsweise um ein Faser-Bragg-Gitter, einen Metallspiegel oder einen dielektrischen Spiegel, einen Sagnac-Typ-Faserspiegel oder um einen Faraday-Spiegel handeln kann. Auf der anderen Seite wird der zweite Resonator 2 durch einen abstimmbaren Faser-Fabry-Perot-Filter 3 (FFP-TF, Fiber Fabry Perot Tunable Filter) oder einen akustooptisch abstimmbaren Faser-Bragg-Gitter-Filter begrenzt. Bei der Verwendung eines FFP-TF-Filters 3 wird vorzugsweise ein plan-konkaver Typ verwendet, wobei die plane Seite zur Faser 7 gerichtet ist. Auf diese Weise wird die in die Faser zurückreflektierte Intensität erhöht. Bei einer Orientierung der konkaven Oberfläche in Richtung zur Faser 7 würden ansonsten Verluste auftreten. Bevorzugt wird also ein Filter verwendet, bei dem das nicht transmittierte Licht vollständig in den zweiten Resonator zurückreflektiert wird. Der Filter wird vorzugsweise mit einer im Wesentlichen periodischen elektronischen Wellenform mit geringem Phasen- und Amplitudenrauschen (in der Regel weniger als 80 dB) betrieben. Dabei können Rückkopplungsschleifen verwendet werden, um die Frequenz in Bezug auf die Resonatorlänge zu stabilisieren und auf diese Weise thermisch bedingte Schwankungen auszugleichen.

Der erste Resonator 1 wird durch den abstimmbaren Filter 3 und einen weiteren Spiegel 8b begrenzt. In dem ersten Resonator 1 wird ein Teil des Lichts, das in diesem verstärkt wird, ausgekoppelt, wie in Figur 3 durch den Pfeil 9 angedeutet wird. Der in dem ersten Resonator enthaltene optische Verstärker 4 kann beispielsweise ein optischer Halbleiter-Verstärker (SOA - Semiconductor Optical Amplifier) sein. Alternativ können auch mit seltenen Erden dotierte Faserverstärker, oder auch nichtlineare Verstärkungsmedien verwendet werden.

Die Frequenz, mit der der optische Filter 3 moduliert ist, entspricht einer sub-harmonischen der Umlauffrequenz in dem zweiten Resonator 2. Beispielsweise betragen die möglichen Abstimmfrequenzen des optischen Filters 3 bei einer optischen Weglänge von 300 m in dem zweiten Resonator 2 500 KHz, 250 KHz, 166,66 KHz, 125 KHz usw. aber auch 1 MHz, 1,5 MHz usw. Das Licht wird aus dem zweiten Resonator 2 nach n Umläufen aus dem zweiten Resonator in den ersten Resonator eingekoppelt, in dem ersten Resonator verstärkt, und wieder in den zweiten Resonator 2 eingekoppelt. Nach weiteren n Umläufen wird das Licht erneut von dem Filter 3 transmittiert und wieder verstärkt. In dem Transmissionsbereich weist der Filter 3 vorzugsweise eine hohe Transmission, vorzugsweise von mehr als 50 %, und somit eine niedrige Rückreflexion auf.

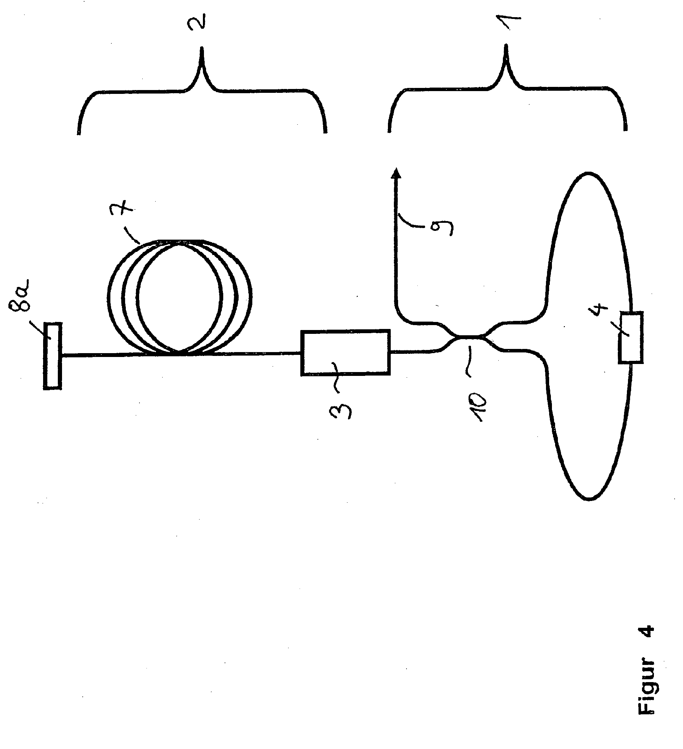

Figur 4 zeigt eine Abwandlung des in Figur 3 dargestellten Ausführungsbeispiels, bei dem innerhalb des ersten Resonators 1 ein optischer Koppler 10 angeordnet ist, durch den ein Teil der Laserstrahlung aus dem ersten Resonator 1 ausgekoppelt wird, wie durch den Pfeil 9 angedeutet wird.

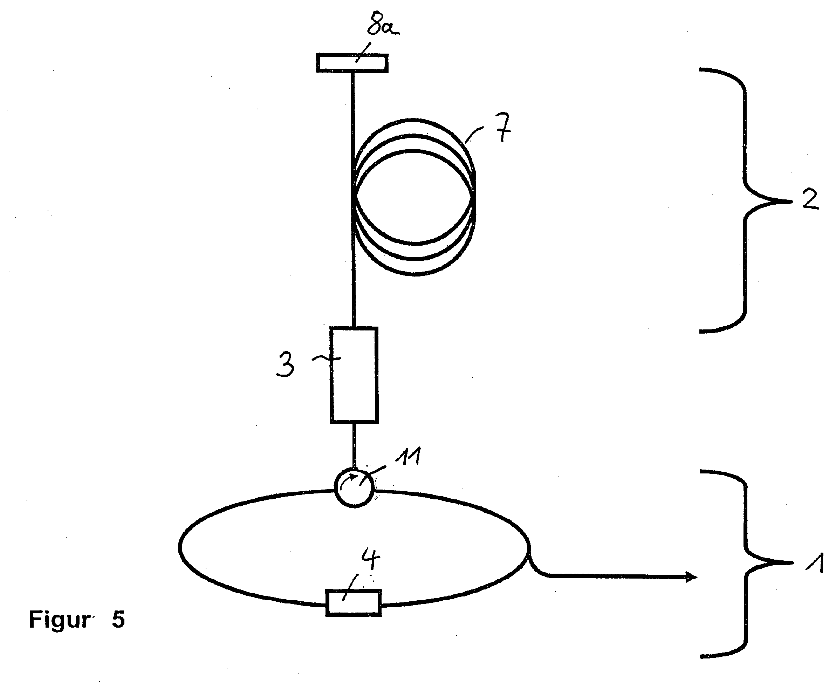

Bei dem in Figur 5 dargestellten Ausführungsbeispiel enthält der erste Resonator 1 einen optischen Zirkulator 11. Der Zirkulator 11 dient als optische Weiche, über die der ringförmige Teil des ersten Resonators 1 mit dem Filter 3 verbunden ist.

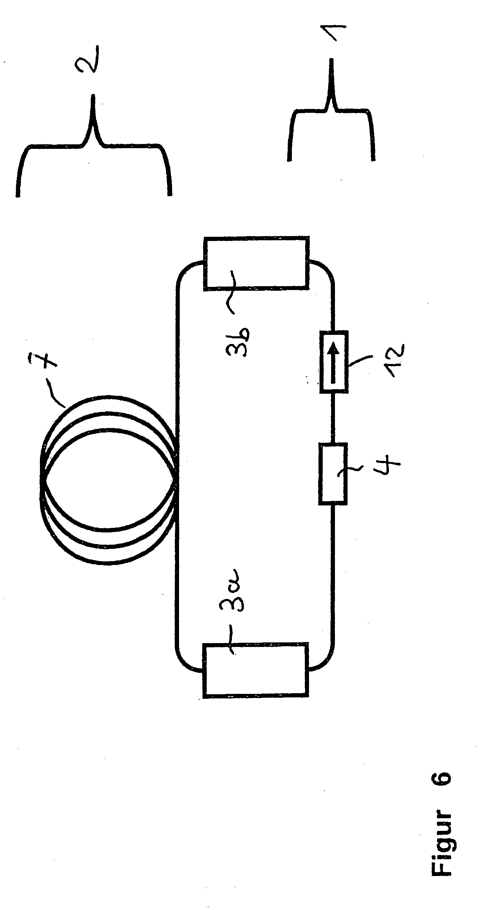

Figur 6 zeigt schematisch ein Ausführungsbeispiel eines abstimmbaren Lasers, bei dem der zweite Resonator 2 an beiden Enden jeweils einen Filter 3a, 3b, insbesondere Fabry-Perot-Filter, aufweist, über die der zweite Resonator 2 an den ersten Resonator 1 gekoppelt ist. Bei dieser Ausführungsform können die Filter 3a, 3b derart synchronisiert werden, dass sie nach einem Umlauf durch den ersten Resonator jeweils ein Transmissionsmaximum aufweisen. Diese Ausführungsform hat den Vorteil, dass ein zeitlich versetzter doppelter Durchgang des Lichts beim Ein- und Auskoppeln aus dem ersten Resonator vermieden wird. Der erste Resonator enthält einen optischen Isolator 12, der nur in der durch den Pfeil angedeuteten Richtung transparent ist. Optional kann ein weiterer Isolator (nicht dargestellt) in dem ersten Resonator vorgesehen sein, wobei die Isolatoren vor-zugsweise beidseitig des optischen Verstärkungsmedi-ums 4 angeordnet sind.

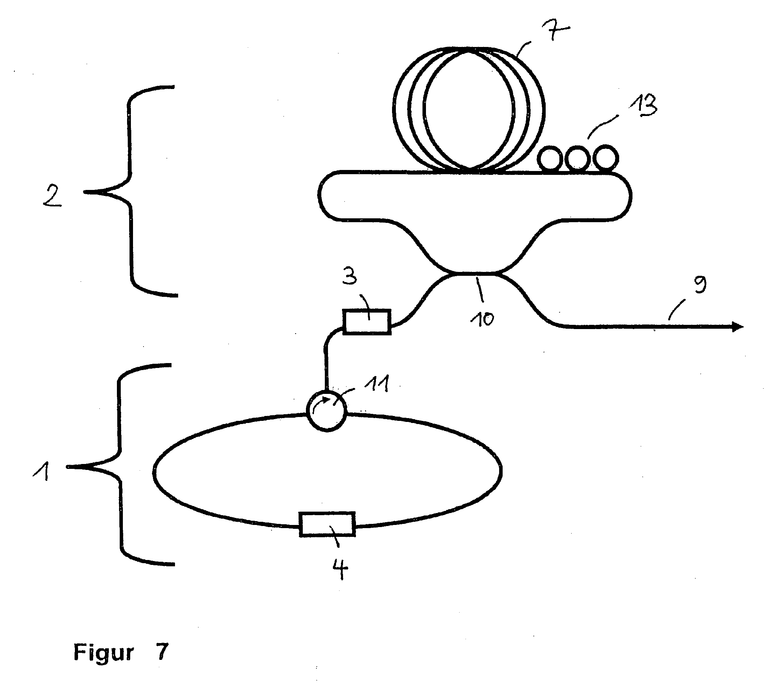

Figur 7 zeigt eine bidirektionale Ausführungsform für eine verbesserte Stabilisierung der Polarisation. Der zweite Resonator 2 enthält einen Polarisationscontroller 13.

Aufgrund des Mehrfachdurchgangs durch den zweiten Resonator 2 wird die Wirkung eines Polarisationscontrollers 13 oder eines Dispersions-Kompensators vervielfacht.

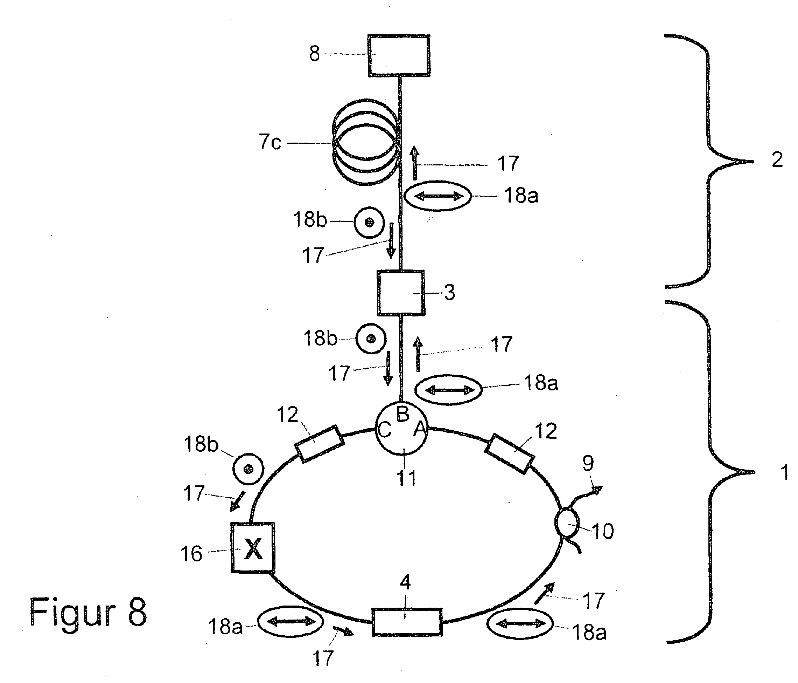

In Figur 8 ist ein weiteres Ausführungsbeispiel schematisch dargestellt. Der als Ringresonator und mit einer polarisationserhaltenden Faser 7a, auch als polarization maintaining fiber bezeichnet, gestaltete erste Resonator 1 umfasst ein polarisationsabhängig verstärkendes Verstärkermedium 4. Als Verstärkermedium 4 kann beispielsweise ein optischer Halbleiterverstärker, auch als Semiconductor Optical Amplifier oder SOA bezeichnet, dienen. Das Verstärkermedium 4 ist so ausgestaltet, dass es nur Licht einer Polarisationsrichtung verstärkt, im Ausführungsbeispiel gemäß Figur 8 ist dies beispielsweise Licht mit bezüglich der Zeichnungsebene horizontaler Polarisationsrichtung 18a, symbolisiert durch Doppelpfeile. Licht mit zur Zeichenebene senkrechter Polarisationsrichtung 18b ist durch Punkte symbolisiert. Die Laufrichtung des Lichts ist durch Pfeile 17 angedeutet.

Zwischen ringförmigen ersten Resonator 1 und dem als Faser-Fabry-Perot ausgestalteten Filter 3 befindet sich ein optischer Zirkulator 11. Der Zirkulator 11 leitet hierbei Licht von Anschluss A zu Anschluss B. Licht, das in den Anschluss B eintritt, tritt aus dem Anschluss C aus, und Licht, das den Anschluss C betritt, wird nicht weitergeleitet. Der Zirkulator 11 wirkt also für Licht aus Richtung hin zum Anschluss C als optischer Isolator. Auf die Polarisationsrichtung des Lichts hat der Zirkulator 11 keinen wesentlichen Einfluss.

Zwischen Anschluss C des Zirkulators 11 und optischem Verstärkermedium 4 befindet sich ein 90°-Spleiß 16, der zwei Enden der polarisationserhaltenden Faser 7a derart miteinander verbindet, dass die Enden zueinander um 90° gedreht sind. Das heißt, beim Durchlaufen des 90°-Spleißes 16 wird die Polarisationsrichtung 18a, 18b des Lichts bezüglich der Zeichenebene um 90° gedreht. Zum Auskoppeln der Strahlung 9 weist der erste Resonator 1 weiterhin einen optischen Koppler 10 auf.

An Anschluss B des Zirkulators 11 ist eine ebenfalls polarisationserhaltende Faser 7b angebracht, deren zweites Ende mit dem Filter 3 verbunden ist. Eine erste, dem Zirkulator 11 zugewandte Seite des Filters 3 weist eine geringere Reflektivität auf als eine zweite Seite des Filters 3, die dem zweiten Resonator 2 zugewandt ist. Die Reflektivität der ersten Seite liegt bevorzugt bei unter 60 %, besonders bevorzugt bei unter 50 %. Die Reflektivität der zweiten Seite liegt bevorzugt bei über 90 %, besonders bevorzugt bei über 95 %.

Der passive zweite Resonator 2 wird also einerseits von der hochreflektierenden zweiten Seite des Filters 3 begrenzt, andererseits von einem als Faraday-Spiegel gestalteten Spiegel 8. Der Spiegel 8 dreht die Polarisationsrichtung 18a, 18b des reflektierten Lichts um 90° im Vergleich zum einfallenden Licht. Filter 3 und Spiegel 8 sind über eine Faser 7c miteinander verbunden. Diese Faser ist als Einmodenfaser oder als polarisationserhaltende Faser ausgestaltet.

Insbesondere bei spektral breitbandigen Lasern tritt der Effekt auf, dass Licht mit Frequenzen am Rande des Verstärkungsbereichs des Verstärkermediums 4 gegenüber Frequenzen im Zentrum des Verstärkungsbereichs nur vergleichsweise schlecht verstärkt wird. Das heißt, befindet sich sowohl Licht mit Frequenzen im Zentrum, als auch Licht mit Frequenzen am Rande des Verstärkungsbereichs in einem Laserresonator, so wird fast ausschließlich das Licht mit Frequenzen im Zentrum verstärkt. Dieser Effekt kann zu einer reduzierten Frequenzbandbreite eines Lasers führen.

Um im Falle eines sub-harmonischen FDML-Lasers diesen Effekt zu unterbinden, kann der Laser, wie in Figur 8 dargestellt, aufgebaut sein. Die Funktionsweise wird im Folgenden näher erläutert. Da der Verstärker 4 polarisationsselektiv verstärkt, weißt das vom Verstärker 4 generierte Licht eine bestimmte Polarisationsrichtung 18a auf, beispielsweise parallel zur Zeichenebene. Dieses generierte Licht gelangt zum Zirkulator 11 und wird von Anschluss A zu Anschluss B weitergeleitet und gelangt anschließend zum Filter 3. Hier können zwei Fälle auftreten: (A) Der abstimmbare Filter 3 ist zum Zeitpunkt des Auftreffens des Lichts transmittierend für die Wellenlänge des Lichts, oder (B) der Filter 3 wirkt sperrend für das Licht, das heißt, ein Teil des Lichts geht verloren, ein weiterer Teil wird zurück in Richtung Anschluss B des Zirkulators 11 reflektiert und läuft über Anschluss C zurück in den ringartigen Teil des ersten Resonators 1.

Im Falle (A) befindet sich das Licht im zweiten Resonator 2, bis der Filter 3 für die entsprechende Wellenlänge wieder transmittierend ist und das Licht in den ersten Resonator 1 gekoppelt wird. Läuft das Licht im zweiten Resonator 2 in Richtung Spiegel 8, so hat es beispielsweise eine Polarisationsrichtung 18a parallel zur Zeichenebene. Trifft das Licht dann auf den Faraday-Spiegel 8, so wird das Licht reflektiert und dabei dessen Polarisationsrichtung um 90° gedreht, so dass die Polarisationsrichtung 18b dann senkrecht zur Zeichenebene ist. Da der Filter 3 keinen Polarisationseffekt aufweist, wird das Licht mit unveränderter Polarisationsrichtung reflektiert und läuft zurück in Richtung Spiegel 8, der die Polarisationsrichtung bei Reflexion erneut um 90° dreht.

Der Filter 3 ist so mit einer Periode t abzustimmen, dass das Licht in den ersten Resonator 1 nach einer ungeraden Anzahl Umläufen im zweiten Resonator 2 eingekoppelt wird, zum Beispiel nach 15 Umläufen. Dieses Licht weist also beim Eintreten in den ersten Resonator 1 eine um 90° gegenüber dem aus dem ersten Resonator 1 austretenden Licht gedrehte Polarisationsrichtung 18b auf.

Dieses einkoppelte Licht wird von Anschluss B auf Anschluss C des Zirkulators 11 geleitet und gelangt zum 90°-Spleiß 16, wodurch die Polarisationsrichtung 18b des Lichts erneut um 90° gedreht wird. Nach Durchlaufen des 90°-Speißes 16 ist die Polarisationsrichtung 18a des Lichts also wieder parallel zur Zeichenebene. Das Licht erreicht also mit der passenden Polarisationsrichtung 18a das Verstärkermedium 4, so dass es von diesem verstärkt wird.

Im Falle (B) wirkt der Filter 3 für das vom Verstärkermedium 4 erzeugte Licht sperrend, das heißt, vom Filter 3 wird das Licht in Richtung Zirkulator 11 zurückreflektiert, wobei dessen Polarisationsrichtung 18a erhalten bleibt. Das heißt, das Licht ist im Ausführungsbeispiel gemäß Figur 8 dann parallel zur Zeichenebene polarisiert. Vom Zirkulator 11 wird das Licht zum 90°-Spleiß 16 weitergeleitet und die Polarisation des Lichts über diesen in eine Richtung 18b senkrecht zur Zeichenebene gedreht, woraufhin dieses Licht vom Verstärkermedium 4 nicht verstärkt werden kann. Es kann also vom Verstärkermedium 4 nur Licht verstärkt werden, das den zweiten Resonator 2 mindestens einmal komplett durchlaufen hat. Es können also nur mit der Abstimmperiode t des Filters 3 synchrone Lichtwellenlängen verstärkt werden, die Verstärkung anderer Wellenlängen ist unterdrückt. Es tritt keine signifikante Verschmälerung der Verstärkungsbandbreite auf.

Licht mit zur Abstimmperiode t des Filters 3 asynchronen Wellenlängen, das den ersten Resonator 1 beispielsweise zwei Mal durchläuft und somit über den 90°-Spleiß 16 zwei Mal eine Polarisationsdrehung erfährt und hierdurch wieder eine Polarisationsrichtung 18a aufweist, die vom Verstärkermedium 4 verstärkt würde, wird auch zwei Mal vom Filter 3 reflektiert. Da der Filter 3 in Sperrstellung in Richtung Zirkulator 11 nur eine relativ geringe Reflektivität aufweist, wird dieses Licht ebenfalls effektiv unterdrückt und eine Verstärkung dieses Lichts unterbunden.

Optional weist der erste Resonator 1 optische Isolatoren 12 auf, die auf dem Faraday-Effekt beruhen können und nur Licht in einer Laufrichtung 17 passieren lassen. Das Verstärkermedium 4 kann alternativ auch als nicht polarisationsabhängig verstärkendes Medium gestaltet sein, ist jedoch in diesem Falle mit einem Polarisator zu kombinieren.

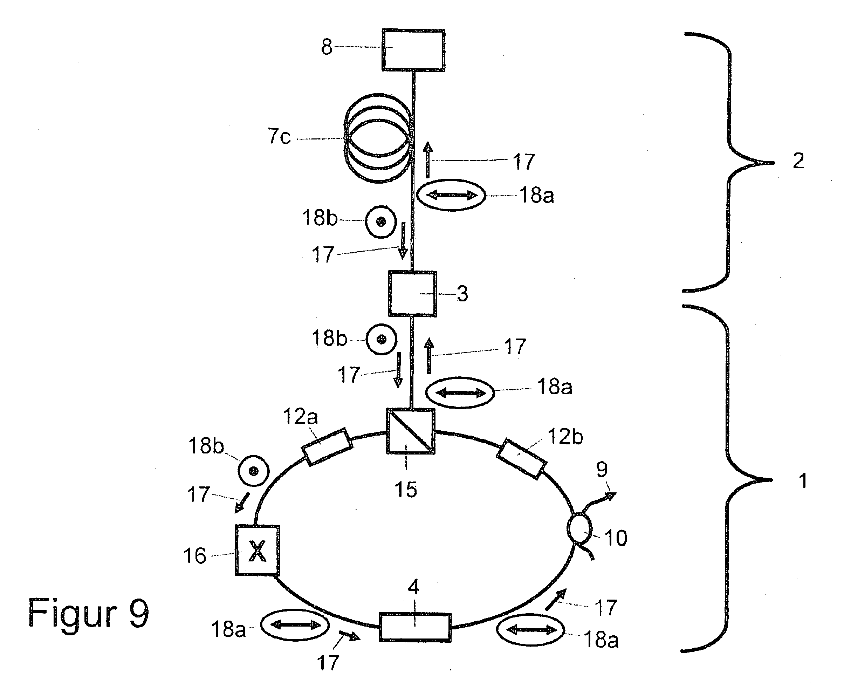

Das Ausführungsbeispiel gemäß Figur 9 entspricht im Wesentlichen dem in Figur 8 gezeigten. Anstelle des Zirkulators 11 ist allerdings ein polarisationsabhängig reflektierender Strahlteiler 15, auch als Polarizing Beam Splitter, kurz PBS, bezeichnet, eingesetzt. Licht, das beispielsweise eine Polarisationsrichtung 18a parallel zur Zeichenebene aufweist und zum Strahlteiler 15 gelangt, wird in Richtung Filter 3 reflektiert. Licht, für das der Filter 3 sperrend ist, wird vom Filter 3 zurück in Richtung Strahlteiler 20 reflektiert, wobei dessen Polarisationsrichtung 18a erhalten bleibt. Solches Licht wird vom Strahlteiler 20 dann auf demselben Weg wie das einlaufende Licht zurück in Richtung Verstärkermedium 4 reflektiert und durch den optischen Isolator 12a geblockt.

Licht, das vom Strahlteiler 15 reflektiert, vom Filter 3 transmittiert und im zweiten Resonator 2 eine ungerade Anzahl von Umläufen macht, weist eine um 90° gedrehte Polarisation auf, so dass es nach Verlassen des zweiten Resonators 2 vom Strahlteiler 15 transmittiert wird, über den 90°-Spleiß 16 eine Drehung der Polarisationsrichtung 18a, 18b um 90° erfährt und verstärkt werden kann. Über die Kombination von polarisationsabhängig reflektierendem Strahlteiler 15 und optischem Isolator 12a kann Licht mit zur Periode t des Filters 3 asynchroner Wellenlänge auch dann effektiv unterdrückt werden, falls die erste Seite des Filters 3 eine hohe Reflektivität für solches Licht aufweisen sollte. Optional kann zusätzlich ein zweiter Isolator 12b im ersten Resonator 1 platziert werden.

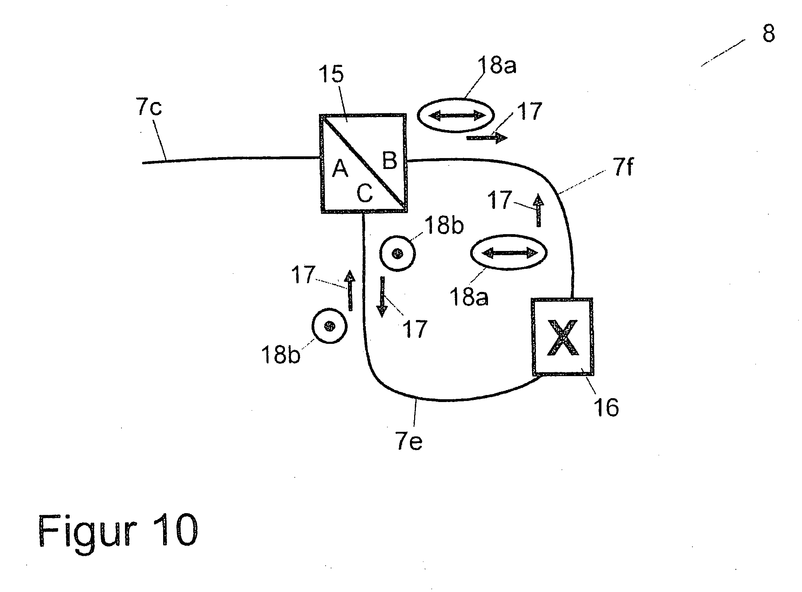

In Figur 10 ist schematisch ein Sagnac-Typ-Faserspiegel dargestellt. Ein Sagnac-Typ-Faserspiegel kann alternativ zu einem Faraday-Spiegel als polarisationsdrehender Spiegel 8 eingesetzt werden. Licht aus der Faser 7c, die als Einmodenfaser oder als polarisationserhaltende Faser gestaltet ist, gelangt zu einem Anschluss A eines polarisationsabhängig reflektierenden Strahlteilers 15. Licht mit einer Polarisationsrichtung 18a parallel zur Zeichenebene wird vom Strahlteiler 15 in Richtung Anschluss B transmittiert, Licht mit einer Polarisationsrichtung 18b senkrecht zur Zeichenebene wird in Richtung Anschluss C reflektiert. Die Anschlüsse B und C des Strahlteilers 15 sind über polarisationserhaltende Fasern 7e, 7f miteinander verbunden, wobei die Fasern 7e, 7f über einen 90°-Spleiß 16 miteinander verbunden sind. Über diesen 90°-Spleiß 16 wird die Polarisationsrichtung 18a des Lichts, das von Anschluss B des Strahlteilers 15 kommt und in Richtung Anschluss C läuft, um 90° gedreht. Da dann die Polarisationsrichtung 18b senkrecht zur Zeichenebene ist, wird das Licht vom Strahlteiler 15 über Anschluss A zurück in die Faser 7c reflektiert. Analoges gilt für Licht, das von Anschluss C des Strahlteilers 15 zu Anschluss B läuft. Über eine derartige Anordnung kann also die Polarisationsrichtung des die Anordnung durchlaufenden Lichts um 90° gedreht werden. Die Differenz der Längen der Fasern 7e, 7f ist bevorzugt kürzer als die so genannte Beat-Länge, besonders bevorzugt kürzer als die halbe Beat-Länge. Die Längendifferenz zwischen den Fasern 7e, 7f ist insbesondere kleiner als 4 mm.

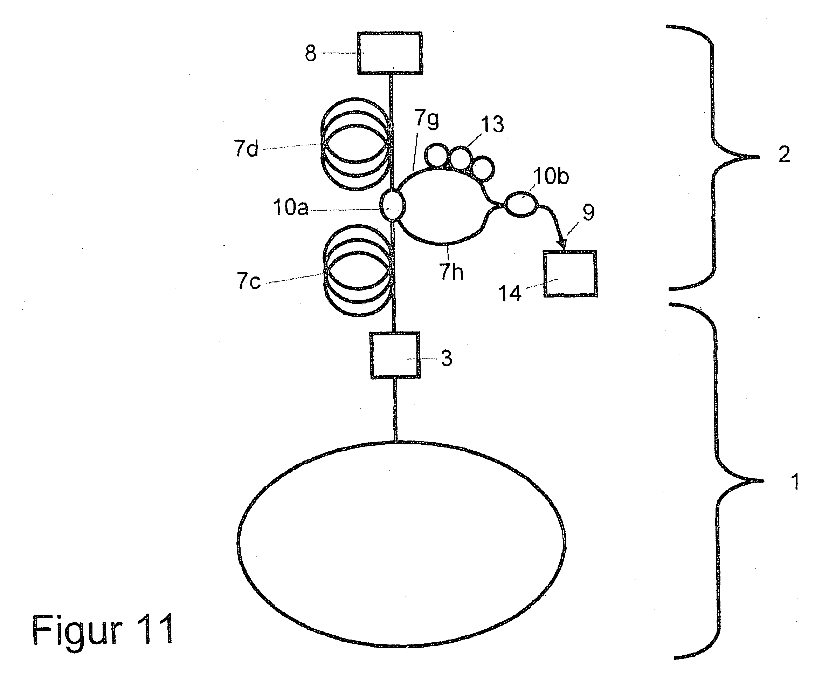

In Figur 11 ist schematisch ein Ausführungsbeispiel gezeigt, bei dem die Strahlung 9 im zweiten Resonator 2 ausgekoppelt wird. Der erste Resonator ist zum Beispiel gemäß Figur 9 oder Figur 10 gestaltet. Zwischen zwei bevorzugt als polarisationserhaltende oder Einmodenfasern ausgestalteten Faser 7c, 7d ist ein optischer Koppler 10a angebracht, über den Licht aus dem zweiten Resonator 2 ausgekoppelt wird. Die Fasern 7c, 7d weisen bevorzugt eine ähnliche Länge auf, besonders bevorzugt sind sie gleich lang. Am Koppler 10a sind zwei Fasern 7g, 7h angebracht. Licht, das im zweiten Resonator 2 vom Filter 3 in Richtung Spiegel 8 läuft, wird in die Faser 7g eingekoppelt und Licht, das im zweiten Resonator 2 vom Spiegel 8 in Richtung Filter 3 läuft, in die Faser 7h. Über Polarisationscontroller 13 kann die Polarisationsrichtung des Lichts in der Faser 7g so eingestellt werden, dass die Polarisationsrichtung der des Lichts in der Faser 7h entspricht. Über einen weiteren Faserkoppler 10b kann das Licht aus beiden Fasern 7g, 7h vereinigt werden.

Anstelle eines zweiten Kopplers 10b kann alternativ auch ein polarisationsabhängig reflektierender Strahlteiler in einer Anordnung analog zu der in Figur 10 gezeigten verwendet werden, um die beiden Teilstrahlen aus den Fasern 7g, 7h miteinander zu kombinieren. Im diesem Fall ist auch der Polarisationscontroller 13 nicht notwendig. Allerdings kann dann die ausgekoppelte Strahlung 9 zu verschiedenen Zeitpunkten unterschiedliche Polarisationsrichtungen aufweisen, was in einigen Anwendungen erwünscht sein kann.

Eine weitere Alternative besteht darin, anstelle von Polarisationscontroller 13 und/oder polarisationsabhängigen Strahlteiler beziehungsweise Koppler 10b einen polarisationsunabhängigen 50 % Strahlteiler zu verwenden. In diesem Falle sind die Koppelverluste beim Zusammenführen der Teilstrahlen aus den Fasern 7g und 7h allerdings relativ hoch.

Die so ausgekoppelte Strahlung 9 kann anschließend optional je nach Erfordernissen entweder zu einem Messplatz geführt werden oder etwa mittels einer aktiven Verstärkerfaser oder eines optischen Halbleiterverstärkers 14 weiter verstärkt werden.

Die Ausführungsbeispiele, etwa gemäß Figur 7 und Figur 11, können auch miteinander kombiniert werden.

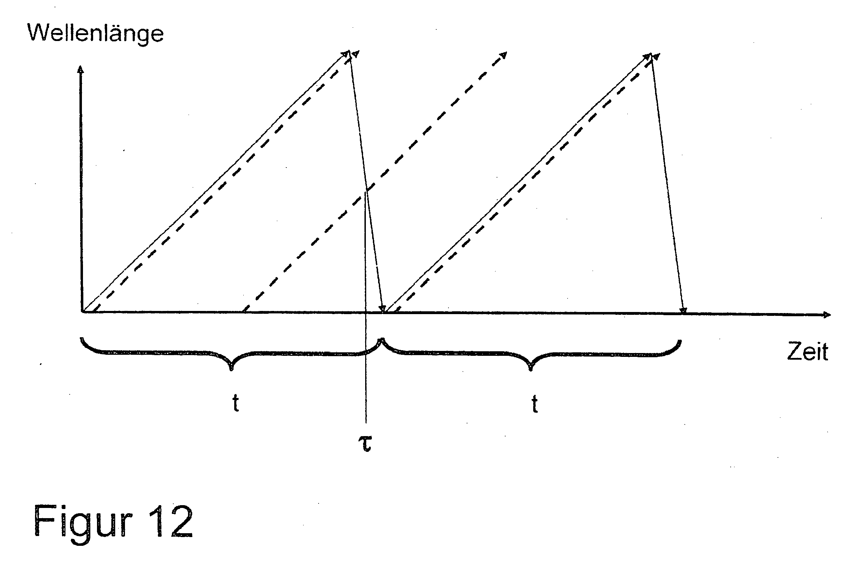

Ein weiteres Problem, das bei einem sub-harmonischen FDML-Laser auftreten kann, ist in Figur 12 illustriert. Hierbei ist die Transmissionswellenlänge des Filters 3 beziehungsweise die Wellenlänge des auf dem Filter 3 treffenden Lichts gegenüber der Zeit auftragen. Die Transmissionswellenlänge des Filters 3 ist als durchgezogene Linie dargestellt, die Wellenlänge des Lichts, das auf den Filter 3 trifft, als Strichlinie. Der Filter 3 wird beispielsweise mit einer Sägezahnspannung betrieben. Die beiden Flanken der Sägezahnspannung weisen bevorzugt eine unterschiedliche Steigung auf, so dass das Zurückfahren des Filters 3 in eine Startposition schneller geschieht, als das Durchstimmen der Transmissionswellenlänge. Beim Zurückfahren des Filters 3 kann es geschehen, dass dieser eine Transmissionswellenlänge aufweist, bei der dann während des Zurückfahrens Licht durch den Filter 3 in den ersten Resonator 1 transmittiert wird. In Figur 12 geschieht dies zum Zeitpunkt τ. Dies kann zu unerwünschten Leistungsschwankungen des FDML-Lasers führen. Dieser Effekt kann beispielsweise dadurch vermieden werden, dass die Länge des zweiten Resonators 2 und die Abstimmperiode t des Filters 3 in geeigneter Weise aufeinander angepasst werden.

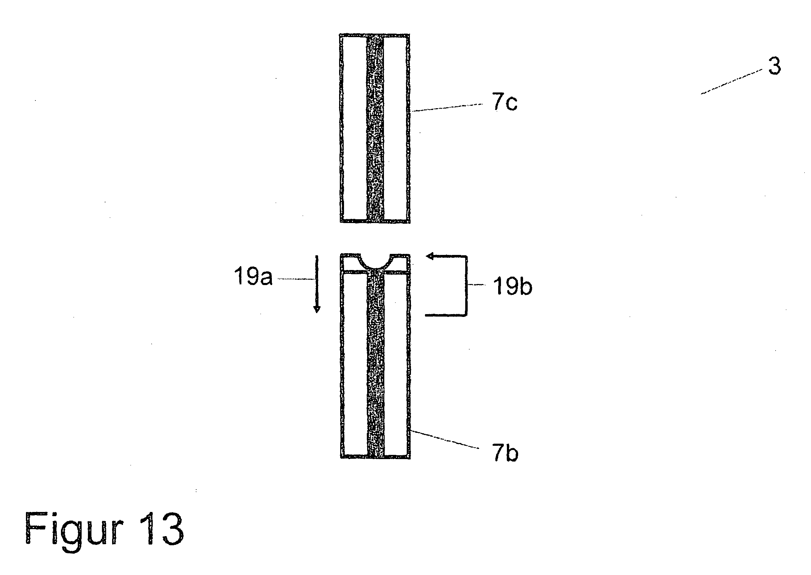

Eine alternative Möglichkeit besteht darin, dass der Filter 3 in Zeitbereichen, in denen eine Transmission von Licht durch den Filter 3 hindurch unerwünscht ist, nicht transmittierend wirkt. Eine Möglichkeit, dies zu realisieren, ist in Figur 13 schematisch dargestellt. Zum Beispiel der zum zweiten Resonator 2 gehörende Teil der Faser 7c, mit dem die zweite Seite des Filters 3 gebildet ist, ist mechanisch fixiert. Die erste Seite des Filters 3, die mit der Faser 7b in Verbindung steht, ist beweglich gelagert. Neben einer für die Frequenzabstimmung des Faser-Fabry-Perot-Filters 3 verantwortlichen Längsbewegung 19a in Strahlrichtung erfolgt zusätzlich eine Bewegung 19b mit einer Komponente senkrecht zur Transmissionsrichtung des Filters 3. Das heißt, der Filter 3 beziehungsweise das Ende der Faser 7b wird zeitweise so verschoben, dass die Qualität des Fabry-Perots verringert wird und kein Licht von der Faser 7b in die Faser 7c, beziehungsweise umgekehrt, treten kann. Eine solche zwei- oder auch dreidimensionale Bewegung der ersten Seite des Filters 3 beziehungsweise der Faser 7b kann beispielsweise über eine Piezoansteuerung realisiert werden.

## Patentansprüche

1. Abstimmbarer Laser mit einem optischen Verstärkungsmedium (4), einem das optische Verstärkungsmedium (4) enthaltenden ersten Resonator (1) und mindestens einem periodisch abstimmbaren optischen Filter (3),
   **dadurch gekennzeichnet, dass**

   - der Laser einen zweiten Resonator (2) enthält, in dem Licht aus dem ersten Resonator (1) einer Laserwellenlänge eine Umlaufzeit T aufweist,
   - der optische Filter (3) zwischen dem ersten Resonator (1) und dem zweiten Resonator (2) angeordnet ist und der abstimmbare Laser derart ausgelegt ist, dass der optische Filter (3) mit einer Periode t abgestimmt wird, und
   - für die Periode t gilt:

   $$t = (n / m) \, T,$$

   wobei n und m von Null verschiedene ganze Zahlen sind und m / n nicht ganzzahlig ist,
   - und der abstimmbare Laser derart ausgelegt ist, dass während der Periode t der zweite Resonator (2) mehrfach von dem Licht der Laserwellenlänge durchlaufen wird.

2. Abstimmbarer Laser nach Anspruch 1,
   **dadurch gekennzeichnet, dass**
   n ≥ 2 ist.

3. Abstimmbarer Laser nach Anspruch 1 oder 2,
   **dadurch gekennzeichnet, dass**
   der erste Resonator (1) und der zweite Resonator (2) je an mindestens einer Seite durch den optischen Filter (3) begrenzt sind.

4. Abstimmbarer Laser nach Anspruch 3,
   **dadurch gekennzeichnet, dass**
   der abstimmbare Laser derart ausgelegt ist, dass der erste Resonator (1) während der Periode t nur einmal von dem Licht der Laserwellenlänge durchlaufen wird.

**5.** Abstimmbarer Laser nach einem der vorhergehenden Ansprüche,
**dadurch gekennzeichnet, dass**
der zweite Resonator (2) ein passiver Resonator ist.

**6.** Abstimmbarer Laser nach einem der vorhergehenden Ansprüche,
**dadurch gekennzeichnet, dass**
der zweite Resonator (2) mindestens eine optische Faser (7) enthält.

**7.** Abstimmbarer Laser nach einem der vorhergehenden Ansprüche,
**dadurch gekennzeichnet, dass**
der optische Filter (3) ein abstimmbarer Faser-Fabry-Perot-Filter ist.

**8.** Abstimmbarer Laser nach einem der vorhergehenden Ansprüche,
**dadurch gekennzeichnet, dass**
der optische Filter (3) während einer Periode t zeitweise frequenzunabhängig sperrbar ist.

**9.** Abstimmbarer Laser nach Anspruch 8,
**dadurch gekennzeichnet, dass**
der optische Filter (3) senkrecht zu einer Transmissionsrichtung auslenkbar ist.

**10.** Abstimmbarer Laser nach einem der vorhergehenden Ansprüche,
**dadurch gekennzeichnet, dass**
der zweite Resonator (2) mindestens ein polarisationsdrehend wirkendes Element umfasst.

**11.** Abstimmbarer Laser nach Anspruch 10,
**dadurch gekennzeichnet, dass**
zumindest ein polarisationsdrehend wirkendes Element ein Faraday-Spiegel oder ein Sagnac-Typ Faserspiegel ist.

**12.** Abstimmbarer Laser nach einem der vorhergehenden Ansprüche,
**dadurch gekennzeichnet, dass** der erste Resonator (1) mindestens ein polarisationsselektives Verstärkungsmedium (4) aufweist.

**13.** Abstimmbarer Laser nach einem der vorhergehenden Ansprüche,
**dadurch gekennzeichnet, dass**
die Strahlung aus dem zweiten Resonator (2) auskoppelbar ist.

**14.** Abstimmbarer Laser nach einem der vorhergehenden Ansprüche,
**dadurch gekennzeichnet, dass**
der Laser zumindest einen Nachverstärker (14) aufweist.

**15.** Abstimmbarer Laser nach einem der vorhergehenden Ansprüche,
**dadurch gekennzeichnet, dass**
der erste Resonator (1) zumindest eine polarisationserhaltende Faser aufweist.

**Claims**

**1.** A tunable laser with an optical amplification medium (4), a first resonator (1) containing the optical amplification medium (4) and at least one periodically tunable optical filter (3),
**characterised in that**

- the laser contains a second resonator (2), in which light from the first resonator (1) of a laser wavelength has a round-trip time T,
- the optical filter (3) is arranged between the first resonator (1) and the second resonator (2) and the tunable laser is designed such that the optical filter (3) is tuned with a period t, and
- the following applies for the period t:

$$t = (n / m)\, T,$$

wherein n and m are integers different from zero and m/n is not an integer,
- and the tunable laser is designed such that during the period t, the second resonator (2) is traversed multiple times by the light of the laser wavelength.

**2.** The tunable laser according to Claim 1,
**characterised in that**
$n \geq 2$.

**3.** The tunable laser according to Claim 1 or 2,
**characterised in that**
the first resonator (1) and the second resonator (2) are each delimited on at least one side by the optical filter (3).

**4.** The tunable laser according to Claim 3,
**characterised in that**
the tunable laser is designed such that the first resonator (1) is traversed only once during the period t by the light of the laser wavelength.

**5.** The tunable laser according to one of the preceding claims,
**characterised in that**
the second resonator (2) is a passive resonator.

**6.** The tunable laser according to one of the preceding claims,
**characterised in that**
the second resonator (2) contains at least one optical fibre (7).

**7.** The tunable laser according to one of the preceding claims,
**characterised in that**
the optical filter (3) is a tunable fibre Fabry-Perot filter.

**8.** The tunable laser according to one of the preceding claims,
**characterised in that**
the optical filter (3) can be blocked temporarily during a period t, independently of frequency.

**9.** The tunable laser according to Claim 8,
**characterised in that**
the optical filter (3) can be moved perpendicularly to a transmission direction.

**10.** The tunable laser according to one of the preceding claims,
**characterised in that**
the second resonator (2) comprises at least one component which acts to rotate the polarisation.

**11.** The tunable laser according to Claim 10,
**characterised in that**
at least one component acting to rotate the polarisation is a Faraday mirror or a Sagnac-type fibre mirror.

**12.** The tunable laser according to one of the preceding claims,
**characterised in that**
the first resonator (1) has at least one polarisation-selective amplification medium (4).

**13.** The tunable laser according to one of the preceding claims,
**characterised in that**
the radiation can be emitted from the second resonator (2).

**14.** The tunable laser according to one of the preceding claims,
**characterised in that**
the laser has at least one post-amplifier (14).

**15.** The tunable laser according to one of the preceding claims,
**characterised in that**
the first resonator (1) has at least one polarisation-maintaining fibre.

**Revendications**

**1.** Laser accordable, comportant un milieu d'amplification (4) optique, un premier résonateur (1) contenant le milieu d'amplification (4) optique et au moins un filtre optique (3) accordable périodiquement, **caractérisé en ce que**

- le laser contient un deuxième résonateur (2), dans lequel la lumière issue du premier résonateur (1) d'une longueur d'onde du laser présente une période T,
- le filtre optique (3) est disposé entre le premier résonateur (1) et le deuxième résonateur (2) et le laser accordable est conçu de telle sorte que le filtre optique (3) est réglé avec une période t, et
- pour la période t, on applique la formule :

$$t = (n \ / \ m) \ T,$$

dans laquelle n et m sont des nombres entiers différents de zéro et m/n n'est pas un nombre entier,
- et le laser accordable est conçu de telle sorte que pendant la période t, le deuxième résonateur (2) est traversé à plusieurs reprises par la lumière ayant la longueur d'onde du laser.

**2.** Laser accordable selon la revendication 1, **caractérisé en ce que** n ≥ 2.

**3.** Laser accordable selon la revendication 1 ou 2, **caractérisé en ce que** le premier résonateur (1) et le deuxième résonateur (2) sont délimités chacun sur au moins un côté par le filtre optique (3).

**4.** Laser accordable selon la revendication 3, **caractérisé en ce que** le laser accordable est conçu de telle sorte que le premier résonateur (1) est traversé pendant la période t une fois seulement par la lumière ayant la longueur d'onde du laser.

**5.** Laser accordable selon l'une quelconque des revendications précédentes, **caractérisé en ce que** le deuxième résonateur (2) est un résonateur passif.

**6.** Laser accordable selon l'une quelconque des revendications précédentes, **caractérisé en ce que** le deuxième résonateur (2) contient au moins une fibre optique (7).

**7.** Laser accordable selon l'une quelconque des revendications précédentes, **caractérisé en ce que** le filtre optique (3) est un filtre à fibres de Fabry-Perot accordable.

**8.** Laser accordable selon l'une quelconque des revendications précédentes, **caractérisé en ce que** le filtre optique (3) peut être fermé par intermittence pendant une période t, indépendamment de la fréquence.

**9.** Laser accordable selon la revendication 8, **caractérisé en ce que** le filtre optique (3) peut être orienté perpendiculairement à une direction de transmission.

**10.** Laser accordable selon l'une quelconque des revendications précédentes, **caractérisé en ce que** le deuxième résonateur (2) comporte au moins un élément agissant par rotation de la polarisation.

**11.** Laser accordable selon la revendication 10, **caractérisé en ce qu'**au moins un élément agissant par rotation de la polarisation est un miroir de Faraday ou un miroir à fibres du type Sagnac.

**12.** Laser accordable selon l'une quelconque des revendications précédentes, **caractérisé en ce que** le premier résonateur (1) comporte au moins un milieu d'amplification (4) sélectif de polarisation.

**13.** Laser accordable selon l'une quelconque des revendications précédentes, **caractérisé en ce que** le rayonnement issu du deuxième résonateur (2) est déclenchable.

**14.** Laser accordable selon l'une quelconque des revendications précédentes, **caractérisé en ce que** le laser comporte au moins un post-amplificateur (14).

**15.** Laser accordable selon l'une quelconque des revendications précédentes, **caractérisé en ce que** le premier résonateur (1) comporte au moins une fibre recevant la polarisation.

Figur 1

Figur 2

Figur 3

EP 2 147 488 B1

Figur 4

Figur 5

EP 2 147 488 B1

**Figur 6**

Figur 7

EP 2 147 488 B1

Figur 8

Figur 9

Figur 10

EP 2 147 488 B1

Figur 11

EP 2 147 488 B1

Figur 12

Figur 13

EP 2 147 488 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006079078 A3